# EUROPÄISCHE PATENTSCHRIFT

(11) **EP 1 845 349 B1**
(45) Veröffentlichungstag und Bekanntmachung des Hinweises auf die Patenterteilung: **14.05.2008**
(21) Anmeldenummer: 07007384.6
(22) Anmeldetag: 11.04.2007
(51) Int. Cl.: G01J 3/18, G01J 3/24, G02B 21/00

(54) **Spektralanalytische Einheit mit einem Beugungsgitter**
Spectral analytic unit with a diffraction grating
Unité d'analyse spectrale dotée d'un réseau de diffraction

(30) Priorität: 15.04.2006 DE 102006017705
(43) Veröffentlichungstag der Anmeldung: 17.10.2007
(73) Patentinhaber: Carl Zeiss MicroImaging GmbH, 07745 Jena (DE)
(72) Erfinder: Dobschal, Hans-Jürgen, 99510 Kleinromstedt (DE); Wolleschensky, Ralf, 07743 Jena (DE); Bathe, Wolfgang, 07743 Jena (DE); Steinert, Jörg, 07743 Jena (DE)

(56) Entgegenhaltungen:
- EP-A- 1 308 715
- WO-A-00/62026

## Beschreibung

Die Erfindung betrifft eine spektralanalytische Einheit mit einem Beugungsgitter und ein entsprechendes Verfahren, bei denen ein von einer Lichtquelle erzeugtes, von einer Probe beeinflußtes und von einer Optik parallelisiertes Lichtbündel, welches einen Wellenlängenbereich aufweist, auf ein Beugungsgitter einfällt, welches die unterschiedlichen Wellenlängen durch Beugung in erste Richtungen spektral aufspaltet, wobei diese Lichtbündel als Lichtbündel 1.-Beugungsordnung ohne Umlauf bezeichnet werden, und das Beugungsgitter ein einziges Lichtbündel in eine zweite Richtung lenkt, wobei dieses eine Lichtbündel als Lichtbündel 0.-Beugungsordnung ohne Umlauf bezeichnet wird, weiterhin die Wellenlängenteilbereiche des spektral aufgespalteten Lichtbündels 1.-Beugungsordnung ohne Umlauf durch eine Optik auf eine Detektorzeile (3) fokussierbar sind und eine Auswerteelektronik an die Detektorzeile angeschlossen ist, welche das erzeugte Spektrum als Information gewinnt und darstellt.

Die spektrale Einheit findet Anwendung bei allen Spektrometern. Insbesondere kommt die Einheit jedoch in einem konfokalen Laser-Scanning-Mikroskop (LSM), wie dieses in der DE 197 02 753 A1 oder DE 101 51 217 A1 beschrieben ist, als Meßeinrichtung zur spektral aufgespaltenen Detektion der Fluoreszenz zum Einsatz.

Die spektrale Einheit mit einem Beugungsgitter ist im Prinzip wie ein Polychromator aufgebaut. Das von einer Probe ausgestrahlte breitbandige Licht wird durch ein dispersives Element spektral zerlegt und dann mittels einer Detektionseinheit gemessen und ausgewertet. Als dispersives Element wird dabei vorwiegend ein Beugungsgitter eingesetzt. Prinzipiell unterscheidet man bei dem Beugungsgitter nach ebenen Plangittern mit äquidistanten Linien und einem abbildenden Gitter, welches bevorzugt holografisch hergestellt wird.
Bei den ebenen Plangittern sind zwischen Lichtquelle und Gitter eine Kollimationsoptik und zwischen Gitter und Spektrum eine Fokussierungsoptik notwendig. Diese Optiken können Linsen oder Spiegel sein. Üblicherweise wird das Spektrum der 1. Beugungsordnung des Beugungsgitters mittels der Fokussierungsoptik auf den Empfänger der Detektionseinheit abgebildet.

Das Problem dabei ist, dass die Beugungseffizienz des Beugungsgitters in Abhängigkeit von der Wellenlänge, der Gitterkonstanten, dem Gittermaterial und der Profilform sich sehr deutlich ändert, d.h. die Gesamttransmission hat physikalisch bedingt starke Limitierungen.
Insbesondere treten bei kleinen Gitterkonstanten (g) noch Polarisationseffekte auf, wenn g in der Größenordnung der Wellenlänge oder kleiner ist. Die Polarisationseffekte äußern sich in einer starken intensitätsmäßigen Aufspaltung der TE- und TM-Polarisation, wodurch die Beugungseffizienz zumindest in den Randbereichen des Spektrums stark gemindert wird.

Bei einem mechanisch hergestellten Blazegitter ist es üblich, den Blazewinkel der Gitterflanken so zu bestimmen, dass bei einer bestimmten gewünschten Wellenlänge höchstmögliche Beugungseffizienz erreicht wird oder ein Kompromiss für das Abfallen der Beugungseffizienz hergestellt wird. Der Abfall ist ebenfalls umso größer, je größer der Spektralbereich ist.
Eine bekannte Methode zur Umgehung dieses Problems stellt die Verwendung von Echelle-Systemen dar, wie dies in EP 442 596 B1 beschrieben ist. Hierbei wird ein Plangitter in sehr hohen Beugungsordnungen verwendet, wobei zunächst kurze, sich überlagernde Spektralbereiche entstehen, die alle in der Nähe des Blazewinkels arbeiten. Zur lateralen Trennung der Spektren ist dem System ein Prisma zugefügt, welches senkrecht zur Dispersionsrichtung des Gitters arbeitet. Dadurch erhält man viele lateral übereinander liegende Ordnungszeilen. Voraussetzung für die Anwendung dieses Verfahrens ist allerdings die Verwendung eines Flächenempfängers.
Die Ursache für die spektrale Schwankung der Beugungseffizienz liegt darin, dass das elektromagnetische Verhalten des Gitters einen mehr oder weniger großen Teil des Lichtes in andere als die gewünschte 1. Beugungsordnung beugt, welches dadurch verloren ist und sogar noch Streulichtprobleme erzeugt. Insbesondere geht der größte Teil der Energie in der 0.-Beugungsordnung verloren, insbesondere dann, wenn keine weiteren Beugungsordnungen größer 1 und keine kleiner 0.-Beugungsordnung physikalisch auftreten können.
In WO 00/62026 A1 werden leistungsfähige Spektrometer beschrieben, die basierend auf einem Interferometer eine Fourier-Transformation nutzen.

Die Erfindung soll die Aufgabe lösen, mit wenig Aufwand die Beugungseffizienz einer spektralanalytischen Einheit mit einem Gitter signifikant zu erhöhen.

Die Lösung der Aufgabe gelingt bei einer spektralanalytischen Einheit mit einem Beugungsgitter eingangs genannter Art mit den kennzeichnenden Merkmalen des Anspruchs 1 und mit einem Verfahren mit den kennzeichnenden Merkmalen des Anspruchs 15.
Die Unteransprüche 2 bis 14 sind vorteilhafte Ausgestaltungen des Hauptanspruchs 1. Die Unteransprüche 16 bis 17 sind vorteilhafte Ausgestaltungen des Hauptanspruchs 15.

Die Erfindung beruht darauf, daß die bei der Beugung an einem Gitter entstehende 0.-Beugungsordnung energetisch nicht "verloren" geht, wie dies zum Beispiel durch ausblenden oder absorbieren erfolgt, sondern diese wieder in die spektrale Einheit einzukoppeln und mindestens noch einmal beugen zu lassen. Dabei entstehen nach diesem wiederholten Durchgang ein Anteil an 1.-Beugungsordnung und wieder ein gewisser Restteil an 0.-Beugungsordnung. Dieser wird abermals zurückgekoppelt und noch einmal gebeugt. Theoretisch kann diese Schleife "unendlich" oft durchlaufen werden und die erreichte Beugungseffizienz konvergiert gegen die Summe aus der ursprünglichen 0.-Beugungsordnung und 1.-Beugungsordnung für die jeweilige Farbe. Im Falle, daß nur die 0.-Beugungsordnung und 1.-Beugungsordnung existiert, würde man also über dem gesamten Spektralbereich bis auf Absorptionsverluste ideale Beugungseffizienz erreichen.
Begrenzt wird das Verfahren nur durch die maximal mögliche Größe des Beugungsgitters, der Spiegel und der Fokussierungsoptik. Insbesondere bei moderaten Bündeldurchmessern kann man eine relativ hohe Zyklenzahl realisieren. Der Vorteil dieser Anordnung ist weiterhin, dass sie sich nachträglich in vorhandene Polychromatoraufbauten relativ leicht integrieren läßt.

Die Erfindung wird nachfolgen an Hand von Figuren beschrieben. Es zeigen:
- Figur 1:: Spektralanalytische Einheit mit einem Beugungsgitter, zwei Umlenkspiegeln und einem fokussierenden Spiegel
- Figur 2:: Darstellung der Anordnung gemäß Figur 1 in der Dispersionsebene des Beugungsgitters
- Figur 3:: Ausschnitt aus Figur 2 zur Darstellung der Lage der Umlenkspiegel
- Figur 4:: Anordnung nach Figur 1 in einer Seitenansicht
- Figur 5:: Effizienz der erfindungsgemäßen Anordnung mit Rückkopplung der 0.-Beugungsordnung
- Figur 6:: Spektralanalytische Einheit mit einem Beugungsgitter und einem Umlenkspiegel
- Figur 7:: Spektralanalytische Einheit mit einem Beugungsgitter und drei Umlenkspiegeln
- Figur 8:: Spektralanalytische Einheit mit einem Beugungsgitter, zwei Umlenkspiegeln und einer sammelnden Linse
- Figur 9:: Schematischer Aufbau eines konfokalen Laser-Scanning-Mikroskops mit der erfindungsgemäßen spektralanalytischen Einheit als Meßeinrichtung
- Figur 10:: Eine weitere Ausführung der spektralanalytischen Einheit mit einem Beugungsgitter, mit zwei Umlenkspiegeln
- Figur 11:: Spektralanalytische Einheit, bei der das Beugungsgitter und die Umlenkspiegel eine monolithische Einheit bilden

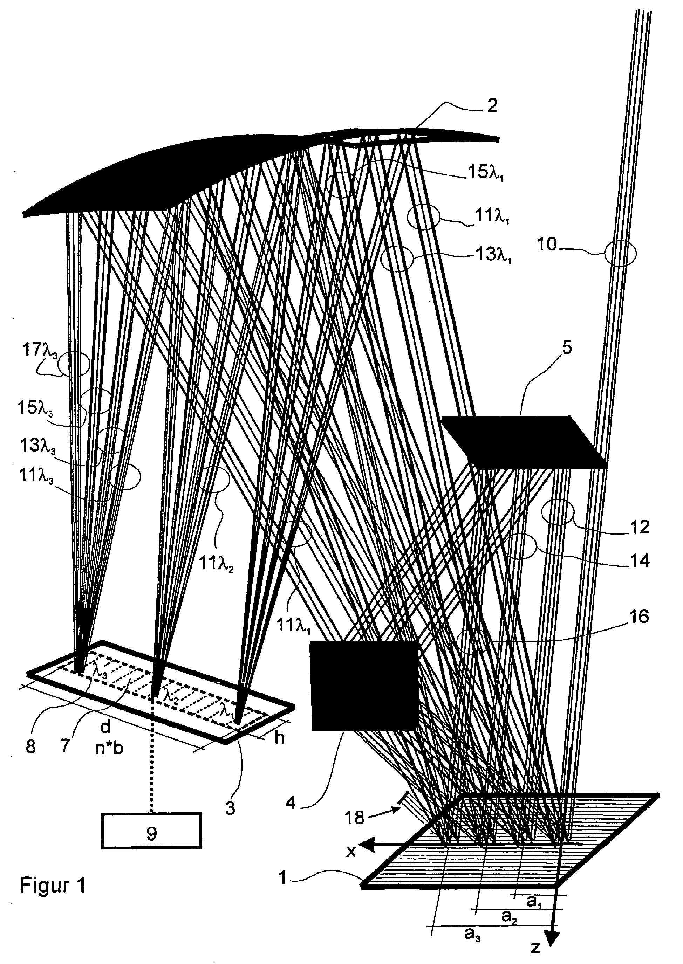

**Figur 1** zeigt schematisch den Aufbau der spektralanalytischen Einheit mit einem Beugungsgitter und zwei Umlenkspiegeln.
Ein einfallendes, im Wesentlichen paralleles Lichtbündel 10 trifft auf ein Beugungsgitter 1. Dieses wird bei entsprechender Dimensionierung des Beugungsgitters 1 in ein Lichtbündel 1.-Beugungsordnung 11 spektral gebeugt und in ein Lichtbündel 0.-Beugungsordnung 12 aufgespaltet. Das Lichtbündel 1.-Beugungsordnung 11 trifft auf einen fokussierenden Spiegel als Optik 2 und wird auf eine Detektorzeile 8 eines Zeilenempfängers 3 entlang der Ausbreitungsrichtung der Zeile konzentriert. Die Detektorzeile besteht aus CCD-Einzelelementen 7.

In Ausbreitungsrichtung der Zeile wird die spektrale Aufspaltung des Lichtbündels 1.-Beugungsordnung detektiert.
Zu dem Beugungsgitter 1 wird ein erster Umlenkspiegel 4 so angeordnet, dass er das Lichtbündel 0.-Beugungsordnung 12 in Richtung des einfallenden Lichtbündels 10 reflektiert. An einem Ort, der möglichst nahe des einfallenden Lichtbündels 10 liegt wird ein zweiter Umlenkspiegel 5 so positioniert, dass er das Lichtbündel 0.-Beugungsordnung parallel zum einfallenden Lichtbündel 10 wieder auf das Beugungsgitter 1 lenkt. Dabei ist der vom Lichtbündel 0.-Beugungsordnung beleuchtete Ort auf dem Beugungsgitter 1 um den Betrag a₁ gegenüber dem Ort des einfallenden Lichtbündels 10 in x-Richtung verschoben. Das Lichtbündel 0.-Beugungsordnung 12 wird dort unter gleichen Bedingungen wie das einfallende Lichtbündel 10 gebeugt. Die hierbei wiederum entstehende 0.-Beugungsordnung 14 wird erneut höhenversetzt über die zwei Umlenkspiegel 4 und 5 eingekoppelt und erreicht das Gitter im Abstand a₂. Ein weiterer Umlauf der Lichtbündel 0.-Beugungsordnung 16 erreicht das Gitter im Abstand a₃. Im Allgemeinen reicht es bereits aus, drei solcher Durchläufe, hier mit den Lichtbündeln 0.-Beugungsordnung 12, 14 und 16 zu realisieren, um eine signifikante Effizienzsteigerung zu erreichen. Im Beispiel wird das Lichtbündel 0.-Beugungsordnung aus dem dritten Umlauf 18 nicht genutzt, weil dieses vernachlässigbar ist.
Alle gleichen Wellenlängen der Lichtbündel 1.-Beugungsordnung 11, 13, 15 und 17 werden durch die Optik 2 in jeweils einem Punkt auf die Detektorzeile 8 abgebildet, so daß eine Linie auf der Detektorzeile 8 den spektralen Verlauf wiedergibt. Die Lichtbündel 1.-Beugungsordnung, die einer Wellenlänge, beispielhaft sind die Wellenlängen λ₁, λ₂, und λ₃ dargestellt, zuzuordnen sind, treffen an jeweils einem Ort auf die Detektorzeile 8. Da die Detektorzeile 8 aus endlich großen Einzelelementen 7 besteht, wird in der Breite b des Einzelelementes 7 von etwas weniger als 1 mm ein Wellenlängenteilbereich von etwa 10 nm empfangen. In diesem Beispiel sind 32 Einzelempfänger 7 auf der Detektorzeile 8, die 32 mm breit ist, angeordnet. Die Einzelempfänger haben eine Höhe h von 10 mm. Der gemessene Wellenlängebereich liegt zwischen 380 nm und 780 nm.

Damit das Verfahren optimal arbeitet, muß das Profildesign des Beugungsgitters 1 so ausgelegt sein, dass möglichst nur die 0.-Beugungsordnung als Falschlichtordnung auftritt. Dies erreicht man dadurch, dass das Blazemaximum des Gitters in den kurzwelligen Bereich verschoben wird. Bei mechanischen Dreiecksprofilen würde das bedeuten, dass der Flankenwinkel flacher wird. Zum Beispiel ist bei einem Beugungsgitter das bei 500 nm 70% in die 1.-Beugungsordnung und die restlichen 30% in die 0.-Beugungsordnung beugt, folgendes Verhalten auftreten:
- Intensität nach 1. Durchlauf = 70 % (Ausgangszustand) (30 % verbleiben in der 0.-Beugungsordnung)
- Intensität nach 2. Durchlauf = 70% + 70% x 30% = 91 % (9% verbleiben in der 0.-Beugungsordnung)
- Intensität nach 3. Durchlauf = 91 % + 70% * 9% = 97.3 % (2.7 % verbleiben in der 0.-Beugungsordnung)
Bei dieser Beispielrechnung sind Absorptionsverluste nicht berücksichtigt, weil diese vernachlässigbar sind.

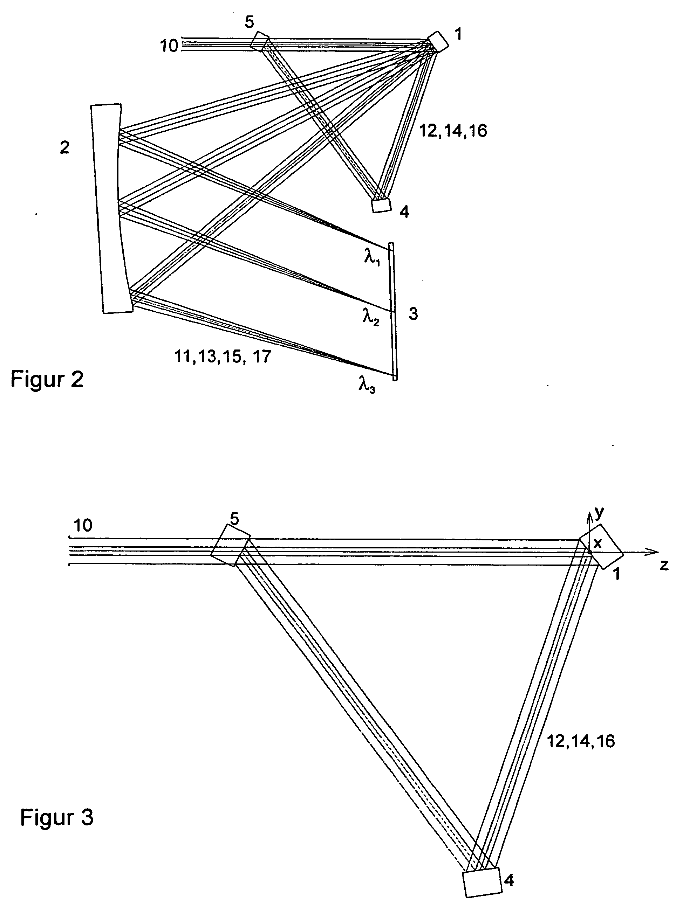

**Figur 2** ist eine Darstellung der Anordnung gemäß Figur 1 in einer Darstellung, in der das einfallende Lichtbündel 10 und die gebeugten Lichtbündel der 1.-Beugungsordnungen 11, 13, 15, 17 in der Blattebene liegen. Die Lichtbündel 0.-Beugungsordnung 12, 14 und 16 werden durch den ersten Umlenkspiegel 4 unterhalb des einfallenden Lichtbündels 10 gelenkt. Der zweite Umlenkspiegel 5 lenkt dieses Lichtbündel 0.-Beugungsordnung parallel zum Lichtbündel 1.-Beugungsordnung wieder auf das Beugungsgitter 1.

**Figur 3** zeigt einen Ausschnitt von Figur 2 zur Veranschaulichung der Lage der Achsen des Bezugssystems.
Der Koordinatenursprung liegt im Scheitel des Beugungsgitters 1, die positive Z-Achse zeigt in Richtung des verlängerten einfallenden Lichtbündels 10. Die Reihenfolge der Translation bzw. Verkippung der Bauelemente ist wie folgt:
- Ausführung der Translation in Richtung x, y, z
- Drehung um die jeweils flächeneigene X-Achse (alpha-Winkel)
- Drehung um die jeweils flächeneigene Y-Achse (beta-Winkel)
- Drehung um die jeweils flächeneigene Z-Achse (gamma-Winkel)

| Bauelement | X | Y | Z | alpha | beta | gamma |
|---|---|---|---|---|---|---|
| Ursprung | 0.0 | 0.0 | 0.0 | 0.0 | 0.0 | 0.0 |

| Beugungsgitter 1 (Liniengitter) | | | | | | |
|---|---|---|---|---|---|---|
| | 0.0 | 0.0 | 0.0 | 36.0 | 0.0 | 0.0 |

| Umlenkspiegel 4 (Planspiegel) | | | | | | |
|---|---|---|---|---|---|---|
| | 0.0 | -38.04226 | -12.36068 | 99.0 | -3.4006 | 0 |

| Umlenkspiegel 5 (Planspiegel) | | | | | | |
|---|---|---|---|---|---|---|
| | 5.00273 | 0.03365 | -40.14952 | 153.1634 | -3.3957 | 4.1346 |

| Optik 2 (fokussierender Spiegel) | | | | | | |
|---|---|---|---|---|---|---|
| | 1.08218 | -40.56915 | -74.59381 | -176.3830 | 0.6787 | 5.1892 |

| Zeilenempfänger 3 (CCD-Zeile) | | | | | | |
|---|---|---|---|---|---|---|
| | -0.82344 | -65.81362 | -8.70134 | -178.0008 | 0.5315 | 5.2063 |

Die Erfindung ermöglicht einen Spektralbereich von 380 nm - 700 nm zu detektieren. Dabei beträgt die Länge des Spektrums 31,2 mm. Der Durchmesser des einfallenden Lichtbündels 10 beträgt 3,0 mm, die Gitterstrichzahl ist mit 1300 Linien/mm bestimmt.
Der Versatz der Lichtbündel 0.-Beugungsordnung in X-Richtung beträgt pro Umlauf 5,0 mm
Der erste Umlenkspiegel 4 und der zweite Umlenkspiegel 5 sind Planspiegel, die Optik 2 ist ein Spiegel mit einem Radius von 151, 0 mm (cc).

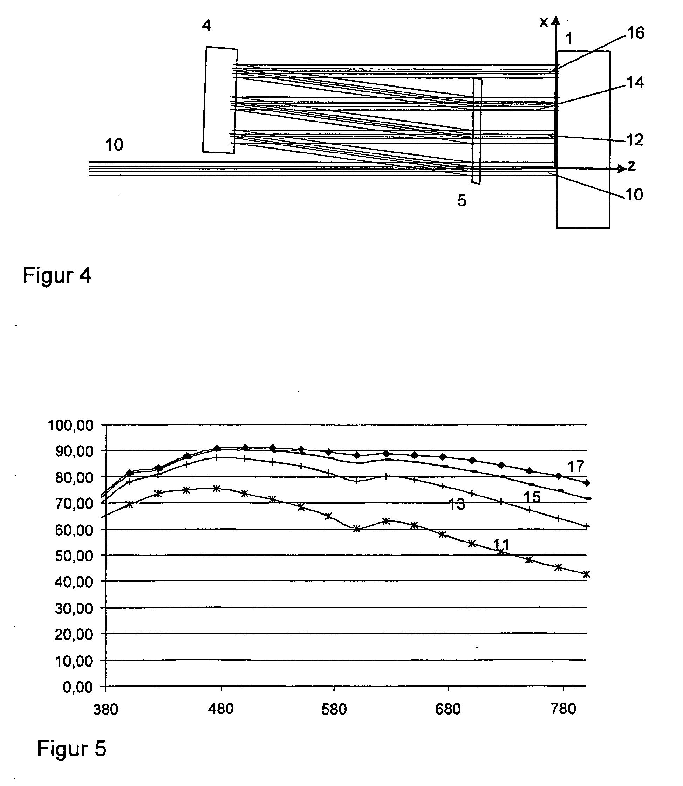

**Figur 4** zeigt eine weitere Ansicht der in Figur 1 dargestellten Anordnung in der x-z-Ebene. Die Zeichenebene liegt senkrecht zur Dispersionsebene. Die Lichtbündel 0.-Beugungsordnung 12, 14, 16 treffen in x-Richung versetzt an unterschiedlichen Orten auf das Beugungsgitter 1 auf.

**Figur 5** zeigt die Beugungseffizienz als Funktion der Wellenlänge für eine bekannte einfache Anordnung mit einem Liniengitter mit 1302 Linien in Aluminium. Das Lichtbündel 1.-Beugungsordnung 11, welches aus einem einfallenden Lichtbündel erzeugt wird, erreicht im Spektralgebiet um 530 nm ihr Intensitätsmaximum bei nahe 80 % und fällt beidseitig stetig bis nahezu 40 % ab. Die entsprechende Kurve ist mit 11 bezeichnet.
Weiterhin zeigt die Figur, dass mit einer steigenden Zahl von Rückkopplungen der Lichtbündels 0.-Beugungsordnung eine zunehmende Effizienzsteigerung erreicht wird. Der Intensität des Lichtbündels 1. -Beugungsordnung 11 aus dem einfallenden Lichtbündel werden Intensitäten der Lichtbündel 1.-Beugungsordnung 13 aus dem ersten Umlauf sowie die Intensitäten der Lichtbündel 15 und 17 aus weiteren Umläufen hinzu addiert. Die entsprechenden resultierenden Kurven sind mit 11, 13, 15 und 17 bezeichnet.

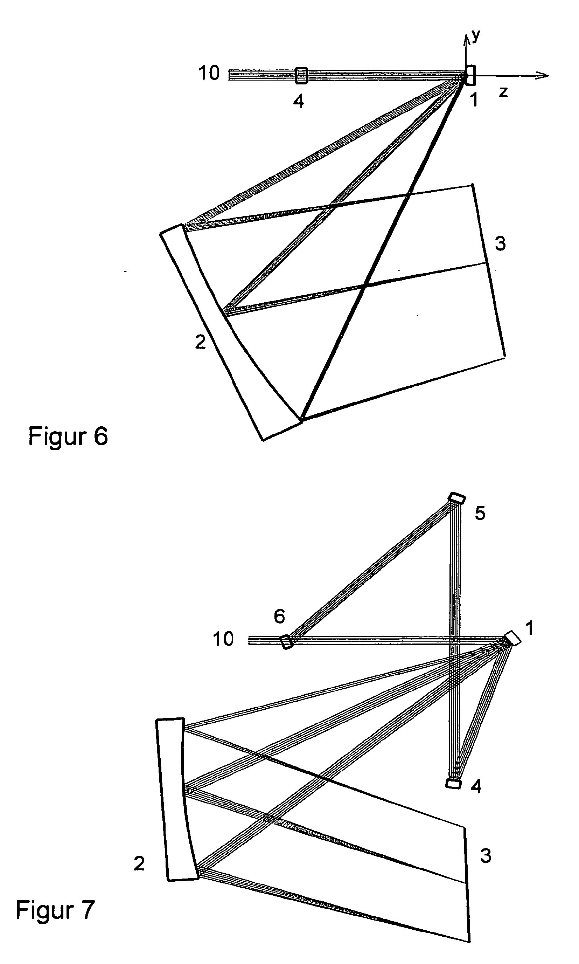

**Figur 6** zeigt schematisch eine spektralanalytische Einheit mit einem Beugungsgitter und einem einzigen Umlenkspiegel.
Das einfallende Lichtbündel 10 fällt hier um die y-Achse leicht verkippt auf das Beugungsgitter 1 ein, wobei das Beugungsgitter 1 und der Umlenkspiegel 4 vorzugsweise parallel zueinander stehen. Die Lichtbündel 0.-Beugungsordnung werden hier unterhalb der Zeichnungsebene mit dem Umlenkspiegel 4 auf das Beugungsgitter 1 zurückreflektiert.

**Figur 7** zeigt schematisch eine spektralanalytische Einheit mit einem Beugungsgitter und drei Umlenkspiegeln 4, 5 und 6. Es können aber auch mehr als drei Umlenkspiegel verwendet werden.

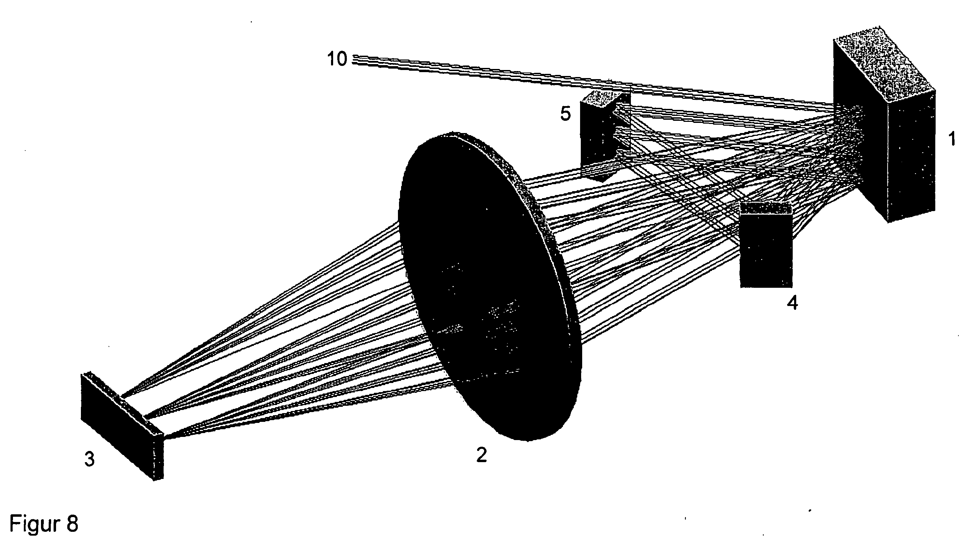

**Figur 8** zeigt eine spektralanalytische Einheit entsprechend Figur 1 mit einem Beugungsgitter, zwei Umlenkspiegeln und einer sammelnden Linse als Optik 2.

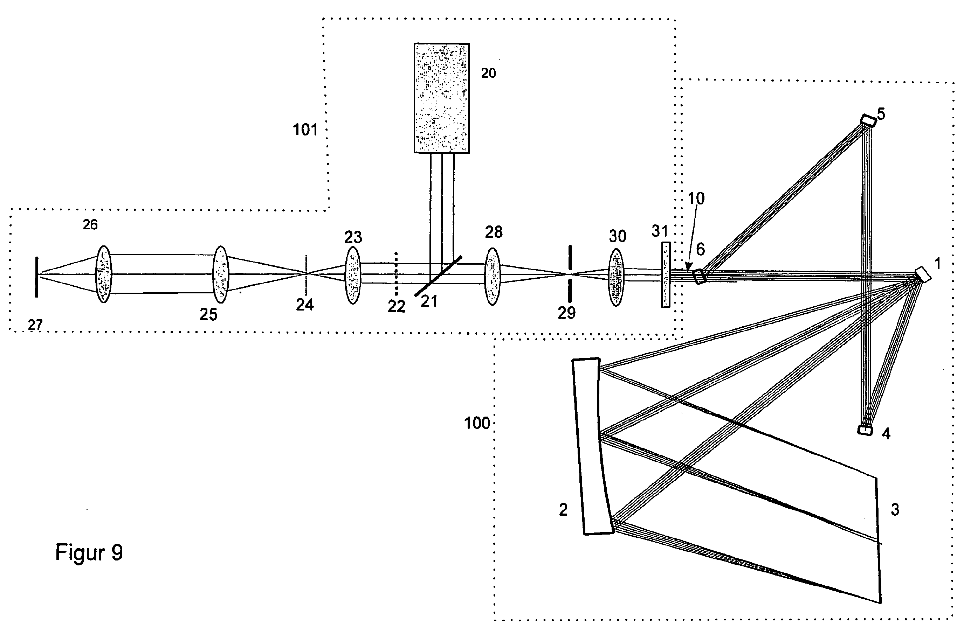

**Figur 9** zeigt den schematischen Aufbau eines konfokalen Laser-Scanning-Mikroskops 101 mit der erfindungsgemäßen spektralanalytischen Einheit 100 als Meßeinrichtung. Die spektralanalytische Einheit 100 entspricht in Ihrem Aufbau der in Figur 7 dargestellten Anordnung.
Das von einer Lichtquelle 20 ausgehende Strahlenbündel gelangt über einen Hauptfarbteiler 21, einen x-y-Scanner 22, eine Scann-Optik 23, eine Tubuslinse 25 und ein Objektiv 26 zur Probe 27.
Das von der Probe 27 ausgehende Lichtbündel gelangt über das Objektiv 26, die Tubuslinse 25, die Scann-Optik 23 den x-y-Scanner 22, den Hauptfarbteiler 21 sowie eine Pinhole-Optik 28, ein Pinhole 29, eine Kollimatoroptik 30 und einen Emissionsfilter 31 auf das Beugungsgitter 1.

Zwischen der Scann-Optik 23 und der Tubuslinse 25 entsteht ein Zwischenbild 24. Mit der erfindungsgemäßen spektralanalytischen Einheit gelingt es mit vergleichsweise geringem Aufwand eine Steigerung der Lichtausbeute bei einer spektralen Messung von bis zu mehr als 40% zu erreichen.
Dabei ist der Raumbedarf für die zusätzliche Umlenkeinrichtung und den zusätzlichen Strahlengang gering.
Besonders vorteilhaft ist auch, dass sich die Erfindung auch in bereits vorhandenen Laser-Scanning-Mikroskope und andere spektrometrische Geräte einbauen lässt.

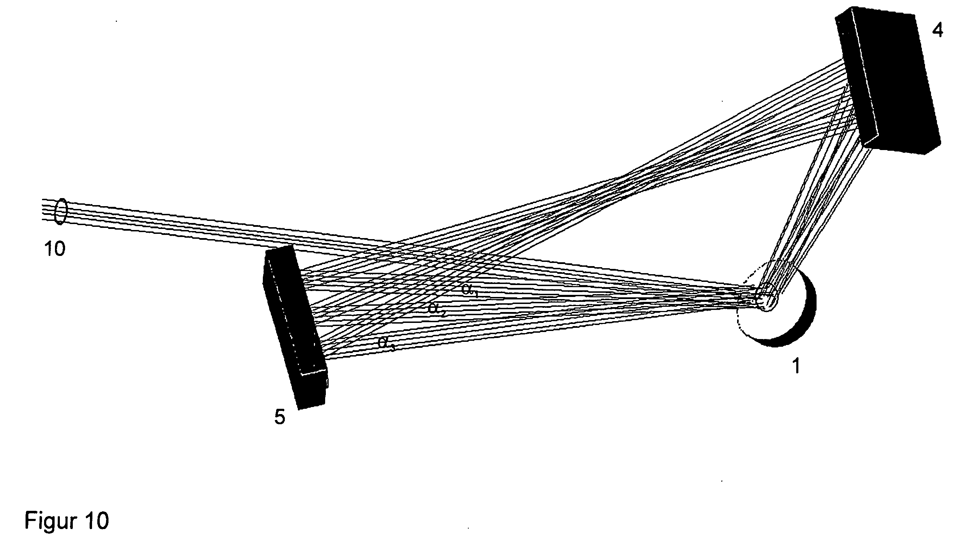

Gemäß **Figur 10** ist es auch möglich, den zweiten Umlenkspiegel 5 so zu drehen, dass die Lichtbündel 0.-Beugungsordnung 12, 14, 16 nach jedem Umlauf die gleiche Stelle des Beugungsgitters 1 treffen. In diesem Falle entsteht allerdings ein offplane-Winkel quer zur Dispersionsrichtung am Gitter, wodurch die spektralen Fokalorte für die einzelnen Umläufe auf dem Zeilenempfänger 3 in verschieden lateralen Höhen h entstehen. Bei der gegebenen hinreichend großen Empfängerhöhe h werden mit jedem Einzelelement 7 Wellenlängenteilbereiche aller spektral aufgespalteten Lichtbündel der 1.-Beugungsordnungen 11, 13, 15, 17 aus den verschiedenen Umläufen erfaßt.

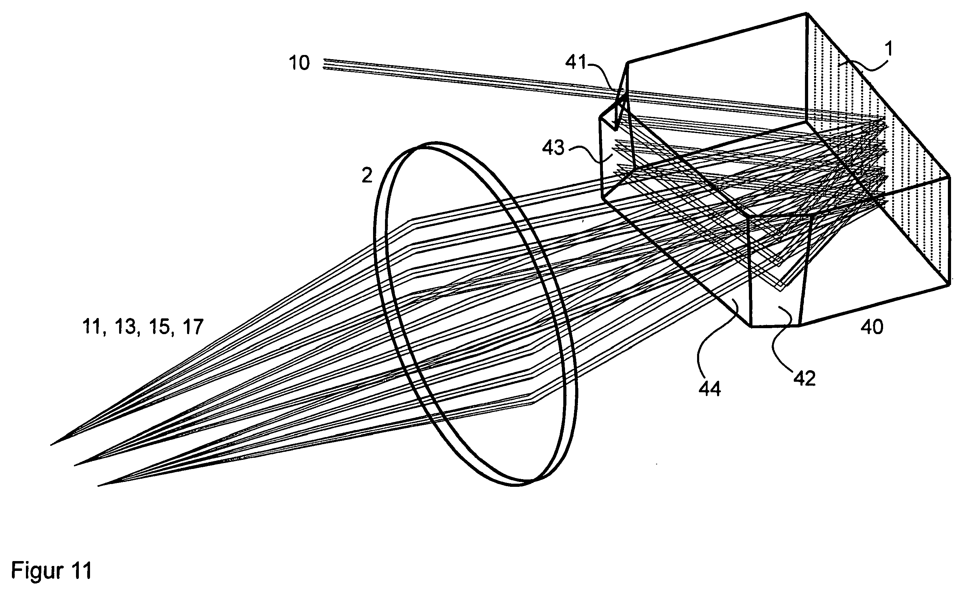

**Figur 11** zeigt eine spektralanalytische Einheit, bei der das Beugungsgitter 1 und die Umlenkeinrichtung eine Einheit bilden. Ein prismenartiger Grundkörper (Prismenteil 40) enthält eine Lichteintrittsfläche 41 für das einfallende Lichtbündel 10 und eine Lichtaustrittsfläche 44 für die Lichtbündel 1.-Beugungsordnungen 11, 13, 15, 17. Zwei Seitenwände sind verspiegelt und bilden mit den Siegelflächen 41 und 42 die Umlenkeinrichtung. Das Beugungsgitter 1 ist in eine Grundfläche des Prismenteils 40 eingebracht.

### Bezugszeichenliste

- 1: Beugungsgitter (Liniengitter)
- 2: Optik (fokussierender Spiegel, Linse)
- 3: Zeilenempfänger (Sensorelemente einer CCD)
- 4: erster Umlenkspiegel (Panspiegel)
- 5: zweiter Umlenkspiegel (Planspiegel)
- 6: dritter Umlenkspiegel (Planspiegel)
- 7: Einzelelement
- 8: Detektorzeile
- 9: Auswerteelektronik

- 10: einfallendes Lichtbündel (parallel)
- 11: Lichtbündel 1.-Beugungsordnung ohne Umlauf (aus dem einfallenden Lichtbündel)
- 12: Lichtbündel 0.-Beugungsordnung ohne Umlauf (aus dem einfallenden Lichtbündel)
- 13: Lichtbündel 1.-Beugungsordnung aus dem ersten Umlauf
- 14: Lichtbündel 0.-Beugungsordnung aus dem ersten Umlauf
- 15: Lichtbündel 1.-Beugungsordnung aus dem zweiten Umlauf
- 16: Lichtbündel 0.-Beugungsordnung aus dem zweiten Umlauf
- 17: Lichtbündel 1.-Beugungsordnung aus dem dritten Umlauf
- 18: Lichtbündel 0.-Beugungsordnung aus dem dritten Umlauf ist vernachlässigbar
- 19:
- 20: Lichtquelle
- 21: Hauptfarbteiler
- 22: x-y-Scanner
- 23: Scann-Optik
- 24: Zwischenbild
- 25: Tubuslinse
- 26: Objektiv
- 27: Probe
- 28: Pinhole-Optik
- 29: Pinhole
- 30: Kollimatoroptik
- 31: Emissionsfilter
- 40: Prismenteil
- 41: Lichteintrittsfläche
- 42: Spiegelfläche
- 43: Spiegelfläche
- 44: Lichtaustrittsfläche

- 100: Spektralanalytische Einheit
- 101: konfokales Laser-Scanning-Mikroskop

- a: Abstand der Lichtbündel 0.-Beugungsordnung vom einfallenden Lichtbündel
- α: Winkel der Lichtbündel 0.-Beugungsordnung in Bezug zum einfallenden Lichtbündel
- h: Höhe des Einzelempfängers, Höhe der Detektorzeile
- b: Breite des Einzelempfängers
- d: Breite der Detektorzeile
- n: Anzahl der Einzelempfänger

## Patentansprüche

1. Spektralanalytische Einheit (100) mit einem Beugungsgitter (1), bei der ein parallelisiertes Lichtbündel (10), welches einen Wellenlängenbereich aufweist, auf ein Beugungsgitter (1) einfällt, welches die unterschiedlichen Wellenlängen durch Beugung in ein Lichtbündel 1.-Beugungsordnung in erste Richtungen spektral aufspaltet, wobei diese Lichtbündel als Lichtbündel 1.-Beugungsordnung ohne Umlauf (11) bezeichnet werden, und das Beugungsgitter (1) ein Lichtbündel 0.-Beugungsordnung in eine zweite Richtung lenkt, wobei dieses Lichtbündel als Lichtbündel 0.-Beugungsordnung ohne Umlauf (12) bezeichnet wird,
weiterhin die Wellenlängenteilbereiche des spektral aufgespalteten Lichtbündels 1.-Beugungsordnung ohne Umlauf (11) durch eine Optik (2) auf eine Detektorzeile (3) fokussiert werden und eine Auswerteelektronik (9) an die Detektorzeile (8) angeschlossen ist, welche das erzeugte Spektrum als Information gewinnt und darstellt,
**dadurch gekennzeichnet, daß**
das Lichtbündel 0.-Beugungsordnung ohne Umlauf (12) auf eine Umlenkeinrichtung (Umlenkspiegel 4, 5, 6) trifft, die so ausgerichtet und positioniert ist, daß dieses Lichtbündel auf das Beugungsgitter (1) einfällt und dort ein Lichtbündel 1.-Beugungsordnung aus einem ersten Umlauf (13) und ein Lichtbündel 0.-Beugungsordnung aus dem ersten Umlauf (14) erzeugt werden,
wobei die gleichen Wellenlängenteilbereiche der Lichtbündel 1.-Beugungsordnung ohne Umlauf (11) und der Lichtbündel 1.-Beugungsordnung aus dem ersten Umlauf (13) durch die Optik (2) auf jeweils ein Einzelelement (7) der Detektorzeile (8) abgebildet werden.

2. Spektralanalytische Einheit mit einem Beugungsgitter nach Anspruch 1, **dadurch gekennzeichnet, daß** die Umlenkeinrichtung (4, 5, 6) so ausgerichtet und positioniert ist, daß das reflektierte Lichtbündel 0.-Beugungsordnung unter dem gleichen Winkel wie das einfallende Lichtbündel (10), jedoch um einen Abstand (a) in X-Richtung zum einfallenden Lichtbündel (10) versetzt, auf das Beugungsgitter (1) einfällt.

3. Spektralanalytische Einheit mit einem Beugungsgitter nach Anspruch 1, **dadurch gekennzeichnet, daß** die Umlenkeinrichtung (4, 5, 6) so ausgerichtet und positioniert ist, daß das reflektierte Lichtbündel 0.-Beugungsordnung unter einem anderen Winkel α, jedoch am gleichen Ort wie das einfallende Lichtbündel (1), auf das Beugungsgitter (1) einfällt.

4. Spektralanalytische Einheit mit einem Beugungsgitter nach Anspruch 1, **dadurch gekennzeichnet, daß** das Lichtbündel 0.-Beugungsordnung aus dem ersten Umlauf (14) auf die Umlenkeinrichtung (Umlenkspiegel 4, 5, 6) trifft, weiterhin auf das Beugungsgitter (1) einfällt und ein Lichtbündel 1.-Beugungsordnung aus dem zweiten Umlauf (15) und ein Lichtbündel 0.-Beugungsordnung aus dem zweiten Umlauf (16) erzeugbar ist, wobei das Lichtbündel 1.-Beugungsordnung ohne Umlauf (11), das Lichtbündel 1.-Beugungsordnung aus dem ersten Umlauf (13) und das Lichtbündel 1.-Beugungsordnung aus dem zweiten Umlauf (15) des jeweiligen Wellenlängenteilbereiches durch die Optik (2) auf das jeweils eine Einzelelement (7) der Detektorzeile (8) abbildbar sind.

5. Spektralanalytische Einheit mit einem Beugungsgitter nach Anspruch 4, **dadurch gekennzeichnet, daß** die Lichtbündel 0.-Beugungsordnung aus dem zweiten Umlauf (16) und Lichtbündel 0.-Beugungsordnung aus weiteren Umläufen (18) auf die Umlenkeinrichtung treffen auf das Beugungsgitter (1) eingespiegelt und spektral aufgespaltet werden.

6. Spektralanalytische Einheit mit einem Beugungsgitter nach Anspruch 5, **dadurch gekennzeichnet, daß** die Umlenkeinrichtung (4, 5, 6) so ausgerichtet und positioniert ist, daß die reflektierten Lichtbündel 0.-Beugungsordnung (12, 14, 16) unter dem gleichen Winkel wie das einfallende Lichtbündel (10), jedoch um einen Abstand (a₁, a₂, a₃) in X-Richtung zum einfallenden Lichtbündel (10) versetzt, auf das Beugungsgitter (1) einfallen.

7. Spektralanalytische Einheit mit einem Beugungsgitter nach Anspruch 5, **dadurch gekennzeichnet, daß** die Umlenkeinrichtung (4, 5, 6) so ausgerichtet und positioniert ist, daß die reflektierten Lichtbündel 0.-Beugungsordnung (12, 14, 16) unter einem abweichenden Winkel (α₁, α₂, α₃), jedoch am gleichen Ort wie das einfallende Lichtbündel (10), auf das Beugungsgitter (1) einfallen, dabei alle Lichtbündel 1.-Beugungsordnung (11, 13, 15, 17) eines Wellenlängenteilbereiches in einer Richtung senkrecht zur Breite (d) der Detektorzeile (8) versetzt auf jeweils eine Detektorzeile (8) abbildbar sind, wobei die Höhe (h) der Einzelelemente (7) so groß bemessen ist, daß alle Lichtbündel 1.-Beugungsordnung (11, 13, 15, 17) eines Wellenlängenteilbereiches detektierbar sind.

8. Spektralanalytische Einheit mit einem Beugungsgitter nach Anspruch 1, **dadurch gekennzeichnet, daß** die Umlenkeinrichtung ein erster Umlenkspiegel (4) ist, der die vom Beugungsgitter (1) gebeugten Lichtbündel 0.-Beugungsordnung (12, 14, 16, ...) nach einer Reflexion wieder auf das Beugungsgitter (1) lenkt.

9. Spektralanalytische Einheit mit einem Beugungsgitter nach Anspruch 1, **dadurch gekennzeichnet, daß** die Umlenkeinrichtung eine Kombination aus einem ersten Umlenkspiegel (4) und einem zweiten Umlenkspiegel (5) ist, welche die vom Beugungsgitter (1) gebeugten Lichtbündel 0.-Beugungsordnung (12, 14, 16, ...) nach zwei Reflexionen wieder auf das Beugungsgitter (1) lenken.

10. Spektralanalytische Einheit mit einem Beugungsgitter nach Anspruch 1, **dadurch gekennzeichnet, daß** die Umlenkeinrichtung eine Kombination aus mehr als zwei Umlenkspiegeln besteht.

11. Spektralanalytische Einheit mit einem Beugungsgitter nach Anspruch 1, **dadurch gekennzeichnet, daß** die Umlenkeinrichtung ein Prismenteil (40) ist, welches senkrecht zur Dispersionsebene des Beugungsgitters (1) mindestens vier optisch wirksame Flächen aufweist, wobei einer Lichteintrittsfläche (41) das Beugungsgitter (1) gegenüberliegt und das Beugungsgitter (1) in das Prismenteil (40) eingebracht ist, weiterhin eine Lichtaustrittsaustrittsfläche (44) für die Lichtbündel 1.-Beugungsordnung und mindestens eine spiegelnde Fläche (42, 43) für Reflexion der Lichtbündel 0.-Beugungsordnung vorgesehen sind.

12. Spektralanalytische Einheit mit einem Beugungsgitter nach Anspruch 1, **dadurch gekennzeichnet, daß** die Optik (2) ein fokussierender Spiegel ist.

13. Spektralanalytische Einheit mit einem Beugungsgitter nach Anspruch 1, **dadurch gekennzeichnet, daß** die Optik (2) eine Licht bündelnde Linse ist.

14. Laser Scanning-Mikroskop mit einer spektralanalytischen Anordnung nach einem der vorangehenden Ansprüche.

15. Verfahren zur spektralanalytischen Untersuchung eines Lichtbündels, bei dem ein parallelisiertes Lichtbündel (10), welches einen Wellenlängenbereich aufweist, auf ein Beugungsgitter (1) einfällt, welches die unterschiedlichen Wellenlängen durch Beugung in ein Lichtbündel 1.-Beugungsordnung in erste Richtungen spektral aufspaltet, wobei diese Lichtbündel als Lichtbündel 1.-Beugungsordnung ohne Umlauf (11) bezeichnet werden, und das Beugungsgitter (1) ein Lichtbündel 0.-Beugungsordnung in eine zweite Richtung lenkt, wobei dieses Lichtbündel als Lichtbündel 0.-Beugungsordnung ohne Umlauf (12) bezeichnet wird,
weiterhin die Wellenlängenteilbereiche des spektral aufgespalteten Lichtbündels 1.-Beugungsordnung ohne Umlauf (11) durch eine Optik (2) auf eine Detektorzeile (3) fokussiert werden und eine Auswerteelektronik (9) an die Detektorzeile (8) angeschlossen ist, welche das erzeugte Spektrum als Information gewinnt und darstellt,
**dadurch gekennzeichnet, daß**
das Lichtbündel 0.-Beugungsordnung ohne Umlauf (12) auf eine Umlenkeinrichtung (Umlenkspiegel 4, 5, 6) trifft, die so ausgerichtet und positioniert wird, daß dieses Lichtbündel auf das Beugungsgitter (1) einfällt und dort ein Lichtbündel 1.-Beugungsordnung aus einem ersten Umlauf (13) und ein Lichtbündel 0.-Beugungsordnung aus dem ersten Umlauf (14) erzeugt werden,
wobei die gleichen Wellenlängenteilbereiche der Lichtbündel 1.-Beugungsordnung ohne Umlauf (11) und der Lichtbündel 1.-Beugungsordnung aus dem ersten Umlauf (13) durch die Optik (2) auf jeweils ein Einzelelement (7) der Detektorzeile (8) abgebildet werden.

16. Verfahren zur spektralanalytischen Untersuchung eines Lichtbündels nach Anspruch 15, **dadurch gekennzeichnet, daß** das Lichtbündel 0.-Beugungsordnung aus dem ersten Umlauf (14) auf die Umlenkeinrichtung (Umlenkspiegel 4, 5, 6) trifft, weiterhin auf das Beugungsgitter (1) einfällt und ein Lichtbündel 1.-Beugungsordnung aus dem zweiten Umlauf (15) und ein Lichtbündel 0.-Beugungsordnung aus dem zweiten Umlauf (16) erzeugt werden, wobei das Lichtbündel 1.-Beugungsordnung ohne Umlauf (11), das Lichtbündel 1.-Beugungsordnung aus dem ersten Umlauf (13) und das Lichtbündel 1.-Beugungsordnung aus dem zweiten Umlauf (15) des jeweiligen Wellenlängenteilbereiches durch die Optik (2) auf das jeweils eine Einzelelement (7) der Detektorzeile (8) abgebildet werden.

17. Spektralanalytische Einheit mit einem Beugungsgitter nach Anspruch 16, **dadurch gekennzeichnet, daß** die Lichtbündel 0.-Beugungsordnung aus dem zweiten Umlauf (16) und Lichtbündel 0.-Beugungsordnung aus weiteren Umläufen (18) auf die Umlenkeinrichtung treffen auf das Beugungsgitter (1) eingespiegelt und spektral aufgespaltet werden.

## Claims

1. Spectral analytical unit (100) with a diffraction grating (1), wherein a parallelised light bundle (10) which has a wavelength range is incident on a diffraction grating (1) which spectrally splits the different wavelengths by diffraction into a light bundle of a first order of diffraction in first directions, wherein these light bundles are designated as light bundles of a first order of diffraction without rotation (11), and the diffraction grating (1) directs a light bundle of zero order of diffraction in a second direction, wherein this light bundle is designated as a light bundle of zero order of diffraction without rotation (12), furthermore the wavelength partial ranges of the spectrally split light bundle of the first order of diffraction without rotation (11) are focussed by optics (2) onto a detector line (3) and evaluation electronics (9) are connected to the detector line (8) which obtain and present the produced spectrum as information,
**characterised in that**
the light bundle of zero order of diffraction without rotation (12) strikes a diverting device (diverting mirror 4, 5, 6) which is oriented and positioned in such a way that this light bundle is incident on the diffraction grating (1) and at that location a light bundle of the first order of diffraction is produced from a first rotation (13) and a light bundle of zero order of diffraction is produced from the first rotation (14),
wherein the same wavelength partial ranges of the light bundles of the first order of diffraction without rotation (11) and of the light bundles of the first order of diffraction from the first rotation (13) are imaged by the optics (2) onto a respective individual element (7) of the detector line (8).

2. Spectral analytical unit with a diffraction grating as claimed in claim 1, **characterised in that** the diverting device (4, 5, 6) is oriented and positioned in such a way that the reflected light bundle of zero order of diffraction is incident on the diffraction grating (1) at the same angle as the incident light bundle (10) but is offset by a distance (a) in the X direction with respect to the incident light bundle (10).

3. Spectral analytical unit with a diffraction grating as claimed in claim 1, **characterised in that** the diverting device (4, 5,6) is oriented and positioned in such a way that the reflected light bundle of zero order of diffraction is incident on the diffraction grating (1) at a different angle α but at the same location as the incident light bundle (1).

4. Spectral analytical unit with a diffraction grating as claimed in claim 1, **characterised in that** the light bundle of zero order of diffraction from the first rotation (14) strikes the diverting device (diverting mirror 4, 5, 6), is further incident on the diffraction grating (1) and a light bundle of the first order of diffraction can be produced from the second rotation (15) and a light bundle of zero order of diffraction can be produced from the second rotation (16), wherein the light bundle of the first order of diffraction without rotation (11), the light bundle of the first order of diffraction from the first rotation (13) and the light bundle of the first order of diffraction from the second rotation (15) of the respective wavelength partial range can be imaged by the optics (2) onto the respective individual element (7) of the detector line (8).

5. Spectral analytical unit with a diffraction grating as claimed in claim 4, **characterised in that** the light bundles of zero order of diffraction from the second rotation (16) and light bundles of zero order of diffraction from further rotations (18) strike the diverting device, are reflected in onto the diffraction grating (1) and spectrally split.

6. Spectral analytical unit with a diffraction grating as claimed in claim 5, **characterised in that** the diverting device (4, 5, 6) is oriented and positioned in such a way that the reflected light bundles of zero order of diffraction (12, 14, 16) are incident on the diffraction grating (1) at the same angle as the incident light bundle (10) but offset by a distance (a₁, a₂, a₃) in the X direction with respect to the incident light bundle (10).

7. Spectral analytical unit with a diffraction grating as claimed in claim 5, **characterised in that** the diverting device (4, 5, 6) is oriented and positioned in such a way that the reflected light bundles of zero order of diffraction (12, 14, 16) are incident on the diffraction grating (1) at a different angle (α₁, α₂, α₃) but at the same location as the incident light bundle (10), in so doing all light bundles of the first order of diffraction (11, 13, 15, 17) of a wavelength partial range can be imaged onto a respective detector line (8) offset in a direction perpendicular to the width (d) of the detector line (8), wherein the height (h) of the individual elements (7) is such that all light bundles of the first order of diffraction (11,13, 15, 17) of a wavelength partial range can be detected.

8. Spectral analytical unit with a diffraction grating as claimed in claim 1, **characterised in that** the diverting device is a first diverting mirror (4) which, after reflection, diverts the light bundles of zero order of diffraction (12, 14, 16, ...), which are diffracted by the diffraction grating (1), onto the diffraction grating (1).

9. Spectral analytical unit with a diffraction grating as claimed in claim 1, **characterised in that** the diverting device is a combination of a first diverting mirror (4) and a second diverting mirror (5) which, after reflection, divert the light bundles of zero order of diffraction (12, 14, 16, ...), which are diffracted by the diffraction grating (1), onto the diffraction grating (1).

10. Spectral analytical unit with a diffraction grating as claimed in claim 1, **characterised in that** the diverting device a combination consists of more than two diverting mirrors *[sic].*

11. Spectral analytical unit with a diffraction grating as claimed in claim 1, **characterised in that** the diverting device is a prism part (40) which has at least four optically active surfaces perpendicular to the dispersion plane of the diffraction grating (1), wherein the diffraction grating (1) is opposite a light admission surface (41) and the diffraction grating (1) is introduced into the prism part (40), furthermore a light exit surface (44) for the light bundles of the first order of diffraction and at least one reflecting surface (42, 43) for reflection of the light bundles of zero order of diffraction are provided.

12. Spectral analytical unit with a diffraction grating as claimed in claim 1, **characterised in that** the optics (2) are a focussing mirror.

13. Spectral analytical unit with a diffraction grating as claimed in claim 1, **characterised in that** the optics (2) are a light-bundling lens.

14. Laser scanning microscope with a spectral analytical arrangement as claimed in any one of the preceding claims.

15. Method for spectral analytical examination of a light bundle, wherein a parallelised light bundle (10) which has a wavelength range is incident on a diffraction grating (1) which spectrally splits the different wavelengths by diffraction into a light bundle of a first order of diffraction in first directions, wherein these light bundles are designated as light bundles of a first order of diffraction without rotation (11), and the diffraction grating (1) directs a light bundle of zero order of diffraction in a second direction, wherein this light bundle is designated as a light bundle of zero order of diffraction without rotation (12), furthermore, the wavelength partial ranges of the spectrally split light bundle of the first order of diffraction without rotation (11) are focussed by optics (2) onto a detector line (3) and evaluation electronics (9) are connected to the detector line (8) which obtain and present the produced spectrum as information,
**characterised in that**
the light bundle of zero order of diffraction without rotation (12) strikes a diverting device (diverting mirror 4,5,6) which is oriented and positioned in such a way that this light bundle is incident on the diffraction grating (1) and at that location a light bundle of the first order of diffraction is produced from a first rotation (13) and a light bundle of zero order of diffraction is produced from the first rotation (14),
wherein the same wavelength partial ranges of the light bundles of the first order of diffraction without rotation (11) and of the light bundles of the first order of diffraction from the first rotation (13) are imaged by the optics (2) onto a respective individual element (7) of the detector line (8).

16. Method for spectral analytical examination of a light bundle as claimed in claim 15, **characterised in that** the light bundle of zero order of diffraction from the first rotation (14) strikes the diverting device (diverting mirror 4, 5, 6), is further incident on the diffraction grating (1) and a light bundle of the first order of diffraction from the second rotation (15) and a light bundle of zero order of diffraction from the second rotation (16) are produced, wherein the light bundle of the first order of diffraction without rotation (11), the light bundle of the first order of diffraction from the first rotation (13) and the light bundle of the first order of diffraction from the second rotation (15) of the respective wavelength partial range are imaged by the optics (2) onto the respective individual element (7) of the detector line (8).

17. Spectral analytical unit with a diffraction grating as claimed in claim 16, **characterised in that** the light bundles of zero order of diffraction from the second rotation (16) and light bundles of zero order of diffraction from further rotations (18) strike the diverting device, are reflected in onto the diflraction grating (1) and are spectrally split.

## Revendications

1. Unité (100) d'analyse spectrale comprenant un réseau de diffraction (1), sur laquelle un faisceau de lumière (10) mis en parallèle, qui présente une plage de longueurs d'onde, arrive sur un réseau de diffraction (1) qui dissocie spectralement les différentes longueurs d'onde par diffraction en un premier faisceau lumineux de premier ordre de diffraction dans deux directions, ces faisceaux lumineux étant désignés par faisceaux lumineux de premier ordre de diffraction sans rotation (11), et le réseau de diffraction
(1) guidant un faisceau lumineux d'ordre de diffraction 0 dans une seconde direction, ce faisceau lumineux étant désigné par faisceau lumineux d'ordre de diffraction 0 sans rotation (12),
les plages partielles de longueurs d'onde du faisceau lumineux de premier ordre de diffraction divisé spectralement étant focalisées sans rotation (11) à travers une optique (2) sur une ligne de détecteur (3) et une électronique d'analyse (9) étant raccordée à la ligne de détecteur (8) qui obtient et représente le spectre généré comme information,
**caractérisée en ce que**
le faisceau lumineux d'ordre de diffraction 0 sans rotation (12) arrive sur un dispositif de déviation (miroirs de déviation 4, 5, 6), qui est orienté et positionné de telle sorte que ce faisceau de lumière arrive sur le réseau de diffraction (1) et à cet endroit un faisceau lumineux de premier ordre de diffraction et un faisceau lumineux d'ordre de diffraction 0 sont générés respectivement à partir d'une première rotation (13) et de la première rotation (14),
les mêmes plages partielles de longueurs d'onde des faisceaux lumineux du premier ordre de diffraction sans rotation (11) et des faisceaux lumineux de premier ordre de diffraction provenant de la première rotation (13) sont reproduits par l'optique (2) sur respectivement un élément individuel (7) de la ligne de détecteur (8).

2. Unité d'analyse spectrale comprenant un réseau de diffraction selon la revendication 1, **caractérisée en ce que** le dispositif de déviation (4, 5, 6) est orienté et positionné de telle sorte que le faisceau de lumière réfléchi d'ordre de diffraction 0 arrive sous le même angle que le faisceau de lumière (10) incident, mais décalé d'une distance (a) dans la direction X par rapport au faisceau de lumière (10) incident, sur le réseau de diffraction (1).

3. Unité d'analyse spectrale comprenant un réseau de diffraction selon la revendication 1, **caractérisée en ce que** le dispositif de déviation (4, 5, 6) est orienté et positionné de telle sorte que le faisceau de lumière réfléchi d'ordre de diffraction 0 arrive sous un autre angle α, mais au même endroit que le faisceau de lumière (1) incident, sur le réseau de diffraction (1).

4. Unité d'analyse spectrale comprenant un réseau de diffraction selon la revendication 1, **caractérisée en ce que** le faisceau de lumière d'ordre de diffraction 0 provenant de la première rotation (14) arrive sur le dispositif de déviation (miroirs de déviation 4, 5, 6), arrive ensuite sur le réseau de diffraction (1) et un faisceau de lumière de premier ordre de diffraction peut être généré à partir de la seconde rotation (15) et un faisceau lumineux d'ordre de diffraction 0 est généré à partir de la seconde rotation (16), le faisceau lumineux de premier ordre de diffraction sans rotation (11), le faisceau de lumière d'ordre de diffraction provenant de la première rotation (13) et le faisceau lumineux de premier ordre de diffraction 1 provenant de la seconde rotation (15) de la plage partielle de longueurs d'onde respective pouvant être reproduits par l'optique (2) sur le respectivement un élément individuel (7) de la ligne de détecteur (8).

5. Unité d'analyse spectrale comprenant un réseau de diffraction selon la revendication 4, **caractérisée en ce que** les faisceaux lumineux d'ordre de diffraction 0 provenant de la seconde rotation (16) et les faisceaux lumineux d'ordre de diffraction 0 provenant d'autres rotations (18) arrivent sur le dispositif de déviation, sont réfléchis sur le réseau de diffraction (1) et sont dissociés au plan spectral.

6. Unité d'analyse spectrale comprenant un réseau de diffraction selon la revendication 5, **caractérisée en ce que** les dispositifs de déviation (4, 5, 6) sont orientés et positionnés de telle sorte que les faisceaux lumineux réfléchis d'ordre de diffraction 0 (12, 14, 16) arrivent sous le même angle que le faisceau lumineux (10) incident, mais décalés d'une distance (a₁, a₂, a₃) dans la direction X par rapport au faisceau de lumière (10) incident, sur le réseau de diffraction (1).

7. Unité d'analyse spectrale comprenant un réseau de diffraction selon la revendication 5, **caractérisée en ce que** le dispositif de déviation (4, 5, 6) est orienté et positionné de telle sorte que les faisceaux lumineux réfléchis d'ordre de diffraction 0 (12, 14, 16) arrivent sous un angle (α₁, α,₂ α₃) différent, mais au même endroit que le faisceau de lumière (10) incident sur le réseau de diffraction (1), tous les faisceaux lumineux de premier ordre de diffraction (11, 13, 15, 17) d'une plage partielle de longueurs d'onde pouvant être reproduits sur respectivement une ligne de détecteur décalées dans une direction perpendiculaire à la largeur (d) de la ligne de détecteur (8), la hauteur (h) des éléments individuels (7) étant dimensionnée suffisamment pour que tous les faisceaux lumineux de premier ordre de diffraction (11, 13, 15, 17) d'une plage partielle de longueurs d'onde puissent être détectés.

8. Unité d'analyse spectrale comprenant un réseau de diffraction selon la revendication 1, **caractérisée en ce que** le dispositif de déviation est un premier miroir de déviation (4) qui guide les faisceaux lumineux d'ordre de diffraction 0 (12, 14, 16,...) infléchis par le réseau de diffraction (1) après une réflexion à nouveau sur le réseau de diffraction (1).

9. Unité d'analyse spectrale comprenant un réseau de diffraction selon la revendication 1, **caractérisée en ce que** le dispositif de déviation est une combinaison d'un premier miroir de déviation (4) et d'un second miroir de déviation (5), qui guident les faisceaux lumineux d'ordre de diffraction 0 (12, 14, 16, ...) infléchis par le réseau de diffraction (1) après deux réflexions à nouveau sur le réseau de diffraction (1).

10. Unité d'analyse spectrale comprenant un réseau de diffraction selon la revendication 1, **caractérisée en ce que** le dispositif de déviation comprend une combinaison de plus de deux miroirs de déviation.

11. Unité d'analyse spectrale comprenant un réseau de diffraction selon la revendication 1, **caractérisée en ce que** le dispositif de déviation est une partie de prisme (40) qui présente verticalement au plan de dispersion du réseau de diffraction (1) au moins quatre surfaces efficaces au plan optique, le réseau de diffraction (1) faisant face à une surface d'entrée de lumière (41) et le réseau de diffraction (1) étant introduit dans la partie de prisme (40), une surface de sortie de lumière (44) et au moins une surface (42, 43) réfléchissante étant prévues respectivement pour les faisceaux lumineux de premier ordre de diffraction et pour la réflexion des faisceaux lumineux d'ordre de diffraction 0.

12. Unité d'analyse spectrale comprenant un réseau de diffraction selon la revendication 1, **caractérisée en ce que** l'optique (2) est un miroir focalisant.

13. Unité d'analyse spectrale comprenant un réseau de diffraction selon la revendication 1, **caractérisée en ce que** l'optique (2) est une lentille focalisant de la lumière.

14. Microscope à balayage laser comprenant un agencement d'analyse spectrale selon l'une quelconque des revendications précédentes.

15. Procédé pour l'étude par analyse spectrale d'un faisceau lumineux, dans lequel un faisceau lumineux (10) mis en parallèle, qui présente une plage de longueurs d'onde, arrive sur un réseau de diffraction (1), lequel dissocie spectralement les différentes longueurs d'onde par diffraction en un faisceaux lumineux de premier ordre de diffraction en premières directions, ces faisceaux lumineux étant désignés par faisceau lumineux de premier ordre de diffraction sans rotation (11), et le réseau de diffraction (1) guidant un faisceau lumineux d'ordre de diffraction 0 dans une seconde direction, ce faisceau lumineux étant désigné par faisceau lumineux d'ordre de diffraction 0 sans rotation (12),
les plages partielles de longueurs d'onde du faisceau lumineux de premier ordre de diffraction dissocié spectralement sans rotation (11) étant focalisées par une optique (2) sur une ligne de détecteur (3) et une électronique d'analyse (9) étant raccordée à la ligne de détecteur (8), qui obtient et représente le spectre généré comme information,
**caractérisé en ce que**
le faisceau lumineux d'ordre de diffraction 0 sans rotation (12) arrive sur un dispositif de déviation (miroirs de déviation 4, 5, 6), qui est orienté et positionné de telle sorte que ce faisceau lumineux arrive sur le réseau de diffraction (1) et un faisceau lumineux de premier ordre de diffraction est généré à cet endroit à partir d'une première rotation (13) et un faisceau lumineux d'ordre de diffraction 0 à partir de la première rotation (14),
les mêmes plages partielles de longueurs d'onde des faisceaux lumineux de premier ordre de diffraction sans rotation (11) et des faisceaux lumineux de premier ordre de diffraction provenant de la première rotation (13) étant reproduites par l'optique (2) sur respectivement un élément individuel (7) de la ligne de détecteur (8).

16. Procédé pour l'étude par analyse spectrale d'un faisceau lumineux selon la revendication 15, **caractérisé en ce que** le faisceau lumineux d'ordre de diffraction 0 provenant de la première rotation (14) arrive sur le dispositif de déviation (miroirs de déviation 4, 5, 6), arrive ensuite sur le réseau de diffraction (1) et un faisceau lumineux de premier ordre de diffraction est généré à partir de la seconde rotation (15) et un faisceau lumineux d'ordre de diffraction 0 à partir de la seconde rotation (16), le faisceau lumineux de premier ordre de diffraction sans rotation (11), le faisceau lumineux de premier ordre de diffraction provenant de la première rotation (13) et le faisceau lumineux de premier ordre de diffraction provenant de la seconde rotation (15) de la plage partielle de longueurs d'onde concernée étant reproduits par l'optique (2) sur le respectivement un élément individuel (7) de la ligne de détecteur (8).

17. Unité d'analyse spectrale comprenant un réseau de diffraction selon la revendication 16, **caractérisée en ce que** les faisceaux lumineux d'ordre de diffraction 0 provenant de la seconde rotation (16) et les faisceaux lumineux d'ordre de diffraction 0 provenant d'autres rotations (18) arrivent sur le dispositif de déviation, sont réfléchis sur le réseau de diffraction (1) et sont dissociés au plan spectral.
